Europäisches Patentamt

European Patent Office

Office européen des brevets

(19)

(11) Publication number: **0 567 480 B1**

# EUROPEAN PATENT SPECIFICATION

(45) Date of publication of patent specification: **30.11.94**   (51) Int. Cl.5: **C03B 37/05**

(21) Application number: **92902090.7**

(22) Date of filing: **15.01.92**

(86) International application number:
**PCT/EP92/00086**

(87) International publication number:
**WO 92/12940 (06.08.92 92/21)**

(54) **PROCESS AND APPARATUS FOR MAKING MINERAL WOOL FIBRES.**

(30) Priority: **16.01.91 GB 9100886**

(43) Date of publication of application:
**03.11.93 Bulletin 93/44**

(45) Publication of the grant of the patent:
**30.11.94 Bulletin 94/48**

(84) Designated Contracting States:
**AT BE CH DE DK ES FR GB IT LI LU NL SE**

(56) References cited:
**FR-A- 2 356 606        GB-A- 961 900
GB-A- 999 119         US-A- 2 520 168
US-A- 2 520 169       US-A- 2 807 048
US-A- 3 159 475**

(73) Proprietor: **Rockwool International A/S
Hovedgaden 501
DK-2640 Hedehusene (DK)**

(72) Inventor: **GROVE-RASMUSSEN, Svend
Straedet 2
Herslev
DK-4000 Roskilde (DK)**
Inventor: **ELMEKILDE HANSEN, Lars
Galpestykket 132
DK-4000 Roskilde (DK)**

(74) Representative: **Lawrence, Peter Robin
Broughton et al
GILL JENNINGS & EVERY,
Broadgate House,
7 Eldon Street
London EC2M 7LH (GB)**

## Description

It is known to make inorganic fibres from an inorganic melt using fiberising means comprising a set of rotors each mounted for rotation about a different substantially horizontal axis and arranged such that, when the rotors are rotating, melt poured onto the periphery of the top rotor in the set is thrown on to the periphery of the subsequent rotor (or onto the periphery of each subsequent rotor in sequence) in the set and inorganic fibres are thrown off the or each subsequent rotor.

This general process and apparatus can be used for different types of inorganic melt. Success in the process depends critically upon the viscosity-temperature relationship and the surface tension of the melt at various stages in the process and process. Apparatus designed for a melt having one set of properties is wholly unsuitable for making fibres from a melt of a totally different properties.

In US-A-4,238,213, Pallo describes the manufacture of ceramic fibres from such a fiberising means in which the set of rotors consists of two rotors that, in all the specific description, are described as having the same size and speed of rotation. In particular, the rotors have diameters of 150 to 300mm and rotate at speeds of above 107m/s and it is stated that those high speeds lead to fine average and effective fibre diameters than are obtained at lower speeds. However it is also stated that the process does lead to the presence of coarse shot in the fibre.

A particular problem with ceramic materials is that they do not melt until very high temperatures (typically around 1,800°C) but then change from a highly viscous state (at which they are too viscous to form fibres satisfactorily) to a highly fluid state (at which their viscosity is too low to form fibres) within a range typically of around 50°C.

As a result, it is not practicable to operate such a process with more than two rotors since the melt on the third rotor would inevitably be too cool to form satisfactory fibres.

We are concerned with the production of mineral wool. Whereas aluminum silicate fibres consist of a minimum of 98% $Al_2O_3$ and $SiO_2$ and no more than 2% other oxides, the chemical composition of what we refer to herein as mineral wool is characterised by a large variety of oxides, where the sum of $Al_2O_3$ and $SiO_2$ is generally between 40 and 70%, and the rest is other common oxides from minerals, for instance CaO, MgO, $Fe_2O$, FeO, $TiO_2$ or $Na_2O$, as described in US-A-2,576,312 and in Danish Patent DK-B-159201. The raw material for this mineral wool, is normally composed of one or more of diabase, basalt, slag, limestone, dolomite, cement, clay, feldspart, sand or olivin or other relatively impure, usually iron-containing materials in which event the mineral wool is referred to herein as stone wool. Another type of mineral wool is glass wool, usually made from an iron-free melt containing expesive additives such as soda and borax. Both stone wool and glass wool can be produced at a much wider temperature range - about 200°C - typically 1,400 to 1,600°C. Because of this fundamental difference in the melting and rheology properties and the demand for high output when making mineral wool, processes and apparatus suitable for ceramic fibres are not suitable for efficient and economic production of mineral wool.

Apparatus for making mineral wool fibres from a mineral melt of, for instance, slag or other stone comprises a fiberising chamber,

fiberising means in the chamber for receiving mineral melt, converting it into mineral wool fibres and air supply means for blowing the fibres axially along the chamber, and

collector means comprising a conveyor in the base of the chamber for collecting the blown fibres as a web and for carrying them away from the fiberising means.

The fiberising means comprises a set of rotors as described generally above. However because of the wider melting range, and because of the need to maximise the production of mineral wool, the set of rotors normally consists of either three or, more usually, four rotors.

When making mineral wool, it is known to provide an air supply around the rotors.

The air supply can be arranged merely around the periphery of the set (as in US-A-3,709,670) or there can be an air supply slot associated with the or each of the said subsequent rotors. The slot can be spaced away from the periphery of the rotor as in EP-A-59152 or can be close to it, as in GB-A-1,559,117.

The literature proposes various diameters and speeds for the various rotors and a typical apparatus consists of four rotors with each rotor in the series being significantly larger than, and rotating at a higher peripheral velocity than, the preceding rotor. Typically the final rotor has a diameter almost or about twice the diameter of the top rotor and rotates with a peripheral velocity that typically is three times the peripheral velocity of the top rotor.

The acceleration field that can be imparted by the final rotor is very much more than (for instance five times) the acceleration field that can be imparted by the first rotor but it is not commercially practicable to try to achieve finer diameters by increasing the speed still further because of the extreme engineering and material problems in arranging for the final rotor or rotors to travel at faster speeds. For instance increasing the peripheral velocity of a final rotor of 330mm diameter above its typical present maximum of around 7,000rpm leads to severe risk of shattering of the rotor, unless the rotor is made of exceedingly expensive material. It is proposed in WO/90/15032 to mount a rotor having a diameter of 300 to 400mm on magnetic bearings so as to permit high speeds of revolution, but this still creates engineering and economic difficulties.

Because of the capital investment and the labour involved in operating such a plant, it would naturally be desirable to be able to increase its productivity while maintaining product quality. It is relatively simple to increase the capacity of the furnace for producing the melt and to increase the capacity of the fiberising chamber and the conveyor, but it is more difficult to increase satisfactorily the capacity of the fiberising means.

In particular, any attempts at increasing the throughput of the fiberising means generally lead inevitably to a reduction in product quality. For instance the density that is required to achieve a given Lambda (thermal conductivity) value tends to increase and there will be increasing loss of binder to the atmosphere.

It might be thought that increasing the axial length and/or the peripheral length (i.e., diameter) of each of the rotors would allow increased throughput since they would allow increased surface area for the melt layer. However this causes other problems since increasing the peripheral length increases the extent of cooling around the rotor, and increasing the axial length makes it less easy to control the impact of air on the fibres as they are thrown off the rotor.

It has been proposed in US-A-3,709,670 and US-A-4,119,421 to put two fiberising means in a single fiberising chamber and this will lead to an approximate doubling the capacity of the fiberising chamber. However it will not improve the quality of the product.

It is normally required to supply mineral wool having a specified Lambda value and it is, clearly, commercially desirable to provide this using the minimum amount of mineral wool. Glass wool has the advantage over stone wool that it can provide a specified Lambda value at a much lower density than is required for rock wool. However the lower material and manufacturing costs associated with stone wool allow it to compete satisfactorily with glass wool. It would be highly desirable to be able to produce stone or other mineral wool of improved thermal conductivity without significantly increasing the production costs.

In particular, the purpose of the present invention is to provide stone or other mineral wool having improved quality whilst avoiding significant increase in production costs. This means that, in practice, the total production of the fiberising apparatus should preferably be similar to the production obtained using a conventional fiberising apparatus comprising a fiberising chamber, a single set of rotors and a conveyor collector in the chamber.

According to the invention, apparatus for forming mineral wool comprises

a fiberising chamber,

at least two fiberising means in side-by-side relationship in the chamber each constructed for receiving mineral melt and converting it into mineral wool fibres,

air supply means for blowing the fibres axially along the chamber, and

collector means comprising at least one conveyor in the base of the chamber for collecting the blown fibres and carrying them away from the fiberising means as rock wool,

and each fiberising means comprises a set of at least three rotors each mounted on a housing each for rotation about a different substantially horizontal axis and arranged such that when the rotors are rotating melt poured on to the periphery of the top rotor in the set is thrown on to the periphery of each subsequent rotor in turn and fibres are thrown off the rotors,

characterised in that all the rotors have a size of not more than 250mm diameter, each of the said subsequent rotors in the set is provided with driving means and has a size such that it can rotate to give an acceleration field of above 250km/s$^2$, and

the air supply means comprise air supply slot means associated with each of the said subsequent rotors wherein each slot means has an internal diameter substantially the same as the external diameter of the periphery of its associated rotor and is constructed for discharging an air blast substantially parallel to that periphery to form a wall jet.

Preferably the air blast has both axial and tangential components of velocity.

The acceleration field is the centripetal acceleration and in this specification by referring to the acceleration field of a rotor we mean the value G

where

$$G = r\Omega^2$$

r is the radius of the respective rotor and

$\Omega$ is the angular velocity of that rotor where

$$\Omega = \frac{2\pi n}{60}$$

where n is the revolutions per minute.

The invention also provides a process of making mineral wool fibres characterised in that it is conducted using apparatus according to any preceding claim and comprises pouring mineral melt on to the periphery of the top rotor while rotating the top rotor at a speed such that the acceleration field is above 50km/s$^2$, whereby melt on the top rotor is thrown on to the periphery of the second rotor and then on to the periphery of each subsequent rotor wherein at least the last two rotors rotate to give an acceleration field of at least 250km/s$^2$ and air having a linear velocity of above 100m/s is forced out of each slot means as a wall jet along the periphery of the associated rotor.

Preferably the amount of melt fed on to each of the fiberising means is below 4 tons (often 2 to 3 tons) per hour but, since there are at least two fiberising means in the fiberising chamber, the production of the chamber generally is at least 8 tons and often at least 10 or even 12 per hour.

In the following, the measurement of fibre diameter is referring to a standard accumulated length-based method carried out using a light microscope or a scanning electron microscope. The result on shot content is based on DIN standard No. 4188. The measurements on lambda are based on DIN No. 52612 part 1 and 2. Fibre length is based on 50% quantile on a logarithmic normal distributed graph. Density is calculated from measurement of volume according to DIN 18165 product type WL. The tensile strength measurements are referring to DIN No. 18165, measured on 30 kg/m$^3$ cured product with a binder content of 1.4% by weight.

By the invention it is possible to obtain a novel stone or other mineral wool product having properties very much better than any that have been obtainable before. In particular, by the invention it is possible to make a mineral wool wherein the mineral wool consists of 70 to 90% by weight mineral fibres having a diameter of up to 5$\mu$m, 0 to 5% by weight mineral fibres having a diameter above 5$\mu$m, and 10 to 30% preferably up to 25% by weight shot having a diameter of above 63$\mu$m, and in which the average diameter of the fibres in the wool is from 1 to 4$\mu$m, preferably 1 to 3$\mu$m, the ratio of the average fibre length to the average diameter of the fibres is from 1000 to 3000, the density of the wool is from 15 to 200kg/m$^3$ and the thermal conductivity Lambda is from 30 to 40mW/m$\degree$K at 10$\degree$C and in which the relationship between the density and Lambda is shown in Table 1:

| Lambda mw/m$\degree$K | Maximum Density kg/m$^3$ | Minimum Density kg/m$^3$ |
|---|---|---|
| 40 | 18 | 12 |
| 38 | 18 | 13 |
| 36 | 23 | 15 |
| 35 | 27 | 18 |
| 34 | 31 | 20 |
| 33 | 37 | 23 |
| 32 | 45 | 28 |
| 31 | 65 | 38 |
| 30 | 100 | 5 |

Intermediate values can be obtained by interpolation. The preferred maximum density is shown in Table II below.

The fibre quality obtainable by the invention is of an entirely different order of magnitude from that obtained using conventional fiberising means such as those shown in US-A-3,709,670 or 4,119,421 or even from fiberising means as shown in GB-A-1,559,117 or in EP-A-59152. This is thought to be due to a combination of the very high acceleration field, the provision of the wall jet over the surface that is subject to this very high acceleration field, and the ability to achieve good productivity at low throughput of each fiberising means.

In US-A-3,709,670 and 4,119,421 each set of rotors is a mirror image of the other, and this means that the operator will have to have two different sets of rotors in his plant and will have to maintain a stock of replacement parts for each type of rotor set. Preferably, in the invention, each set of rotors is identical in each of the fiberising means and this has the advantage that it is only necessary to maintain a single set of replacement parts.

By saying that the sets of rotors are identical to one another we mean that they are interchangeable with one another without any adverse effect on the performance of the apparatus. Naturally there can be minor, and insignificant, differences between the sets. Often each entire fiberising means is identical in this sense, so that a fiberising means comprising the housing, the rotors and the air slots around the rotors, is interchangeable with another fiberising means.

In the invention, the largest rotors are much smaller than the largest rotors in conventional commercial apparatus, but the number of revolutions per minute, and therefore the peripheral velocity, are both greater than with conventional apparatus. As a result, the acceleration field is very much greater than with conventional apparatus. Thus, whereas prior to the invention the general trend was to increase the size of some or all of the fiberising rotors, in the invention the largest rotors are smaller but faster than is conventional with the result that the acceleration force on them all is very much more than is conventional.

Whereas in conventional apparatus the highest acceleration field is generally less than $100km/s^2$ or at the most $140km/s^2$ (140,000 metres per second[2]) on the largest rotor, with lower values on the preceding rotors, in the invention all the rotors other than the top rotor in the set have an acceleration field of above $250km/s^2$. Preferably the third, and the fourth rotor if present, have an acceleration field of above $300km/s^2$. The last rotor in the set can have an acceleration field above $300km/^2$ and often above $350km/s^2$. Adequate results can be obtained with the final rotor, and often the second and third rotors, providing an acceleration field of not more than 400, 450 or $500km/s^2$, but very much higher acceleration fields can be provided and can result in improved product quality. For instance acceleration fields of up to $750km/s^2$ or even up to $1000km/s^2$ can give very good products but it is then generally necessary for the rotor diameters to be at the bottom end of the ranges quoted below, for instance 130 to 170mm.

The rotors for these very high speeds can be made from steel conventionally used for fiberising rotors because they can all be of low diameter. The rotors can be mounted in special bearings for high revolutions, for instance tilting-pad slide bearings (for example make Glacier), magnetic bearings (for instance make S2M) or an angular contact ball bearing mounted with oil film damping (for instance make SKF or FAG). Generally they all have diameter below 220mm but usually above 100mm, often above 130mm. Often the top rotor is from 100 to 180mm while the others are usually larger than the top rotor and in the range 140 to 210mm.

Whereas previously it has been conventional for each rotor to be larger than the preceding one, in the invention it is convenient for all the rotors other than the top rotor to be of substantially the same size.

The rotors generally all rotate at 10,000 to 45,000rpm. The second, third and, if present, fourth rotors generally rotate at from 14,000 to 35,000, often 15,000 to 30,000, rpm while the top rotor generally rotates at from 10 to 20,000rpm, often 12,000 to 15,000rpm.

The acceleration field of the top rotor is preferably at least $50km/s^2$ and often is at least $100km/s^2$ but it is generally unnecessary for it to be above $200km/s^2$, with values of around 120 to $160km/s^2$ often being preferred. This is very much greater than in existing apparatus, where the value typically does not exceed $15km/s^2$ on the top rotor.

The ratio of the peripheral velocity of one rotor to the velocity of the preceding rotor is generally from 1:1 to 1.5:1, preferably around 1.1:1 to 1.3:1.

There is an air supply slot means associated with each fiberising rotor close to that rotor for discharging an air blast close to and substantially parallel to the periphery of the rotor with an axial component for carrying the mineral wool fibres axially off that periphery. The air supply slot means comprise a true air slot or a series of blast nozzles as described above. When the air is to have a tangential component of velocity preferably there are direction means for selecting the angle of the discharged air relative to the axial direction. The direction means can be arranged to direct the air at an angle that varies along the length of the slot between the higher angle that is co-rotational with the slot and a lower angle.

As a result of having these direction means directing the air at different angles within the same set, it is now possible to optimise the air flow at each part of each set. As a consequence of this, it is for the first time possible to optimise the air flows in one set in relation to the air flows in the adjacent set, and thus it is possible to obtain very good fiberising results even though the sets of rotors can be very close to one another and can be identical to one another.

Preferably the internal diameter of the slot means is the same as the external diameter of the periphery of the associated rotor and the slot means is constructed to direct the air blast substantially parallel to the surface of that rotor, since this will then lead to the formation of a wall jet. However the internal diameter of the slot means can be a few millimetres more than the diameter of the periphery of the rotor and/or the angle of the air blast can be at a small conical angle with respect to the periphery of the rotor provided the difference in diameter and/or the angle are such that a wall jet is still formed. Whether or not this is occurring can easily be established by identifying the velocity profile adjacent to the surface. When a wall jet exists, the greatest velocity is close (e.g., within 10mm) to the surface both at the rear edge of the rotor and at the front edge of the rotor.

It is essential in the invention that there should be an air slot means associated with each of the second, third and, if present, fourth rotors in each of the fiberising means, but is less important whether or not there is an air slot means associated with the top rotor in each fiberising means.

Generally each slot means extends around at least 1/3 of the periphery of its associated rotor, generally around the outer part distant from the other rotors in the set. Generally it extends around not more than 2/3 or 3/4 of the periphery.

Each slot means generally leads from an air supply chamber within a housing on which the rotors are mounted.

The direction of air from each slot means can be wholly axial but it is often desirable for it to have a corotational tangential component at least in some parts of the slot. For instance the tangential velocity can be up to 30% or even up to 50% or more of the peripheral velocity of the rotor. Typically the tangential component of the air stream has a velocity of from 80 to 100 metres per second, but values down to 50 metres per second or less can be useful. The linear velocity of the air stream generally is in the range 100 to 300 metres per second, often 100 to 200m/s.

The air slot means can consist of inner and outer slot means, wherein the inner slot means provides an inner blast of air that is sufficiently close to the surface to form a wall jet and the outer slot means provides an outer blast of air that merges with the inner blast so as to give a wall jet effect to the combined blasts. Generally the inner surface of the outer slot means is not more than 20 or 30 mm radially from the surface of the rotor and generally it is within 10mm. Preferably the inner and outer blasts have different angles of travel at the time of exiting from their slot means. For instance the inner bast can be wholly axial and the outer slot means can contain the direction means to cause the outer blast to have the desired tangential component.

For optimum results it is important to control the relative positions of the axes of the various rotors and, especially, the relative positions of the axes of the first and second rotors. Preferably the second rotor is slightly below the first rotor such that a line joining the two axes is at an angle of 0 to 20, often 5 to 10, degrees to the horizontal. Generally the melt is fed on to the rotor at a position such that a line from that point of contact to the axis of the first rotor makes an angle of from 40 to 65, generally 45 to 60, degrees to that horizontal. As a result, the rotational distance from the point where the melt contacts the first rotor to the line joining the axes of the first and second rotors is generally in the range 45 to 80°, preferably 50 to 70°.

Preferably each fiberising means consists of four rotors and preferably each fiberising chamber contains at least three, often up to six, sets of fiberising means. Each fiberising means generally has associated with it means for spraying binder into the fibres that are being collected. Suitable binder sprays can be mounted on the rotors and/or elsewhere around the fiberising means, in known manner. Secondary air supplies may be provided around the fiberising means to promote collection of the fibres.

The mineral that is used for forming the fibres in the invention can be any of the minerals conventionally used for forming mineral wool as herein defined. Preferably the product is a stone wool made from for instance rock, slag, diabase or basalt. Although the invention can be applied to the production of glass wool, preferably it is used for stone wool. Such material is distinguished from material used for making ceramic fibres or glass fibres by the relationship between its melting point and viscosity, as is well known in the art. It should have a melting range throughout which fibres can be formed of above 80°C, often 100 to 200°C and typically melts at above 1400°C but below 1700°C.

Although it is possible to use the apparatus of the invention to make products having conventional properties, for instance a tensile strength of 6kN/m$^2$, preferably the invention is used for making high quality products, typically having a tensile strength of 10 to 20, often 12 to 16, kN/m$^2$. Also, it is possible to conduct the process with very low emission of aerosol (binder particles) in the exhaust gases from the chamber, with values of below 100mg/Nm$^3$ (volume of exhaust gases) and often below 70, typically 30 to 50 mg/Nm$^3$ being obtainable. These values are all very much better than those obtainable with conventional processes.

In particular, the products of the invention have a very low shot content as compared to prior art wools. This has the advantages of a reduction in waste of raw materials; a reduction in harshness of the wool normally due to coarse fibres of shot; and the production of a wool with more uniform properties. For instance the products can consist of (based on the inorganic content of the wool) from 70 to 90, generally 75 to 88, often 77 to 83%, by weight fibres having average diameter up to 4$\mu$m, 0 to 5% fibres having diameter above 5µm, 10 to 25%, often 15 to 22%, by weight shot having diameter above 63µm (with the amount of shot above 250µm generally being 0 to 2, often 0 to 1%) and with an average fibre diameter of from 2.0 to 3.5µm and a ratio of average fibre length to average diameter typically of from 1,100 to 2,000, preferably 1,200 to 1,600. The products can be free of bonding agent but preferably include bonding agent, such as conventional resinous bonding agent, eg a phenolic resin.

The products of the invention can also have excellent thermal conductivity values at a given density. The table below shows such values, all Example of the invention and also, for comparison, a value for a typical high quality rock wool made by known prior art processes.

| Lambda | Maximum Density | Minimum Density | Preferred Maximum | Preferred Minimum | Example | Prior Rock Wool |
|---|---|---|---|---|---|---|
| 40 | 18 | 12 | 16 | 12 | 14 | 20 |
| 38 | 18 | 13 | 18 | 14 | 16 | 24 |
| 36 | 23 | 15 | 22 | 18 | 20 | 28 |
| 35 | 27 | 18 | 24 | 20 | 22 | 34 |
| 34 | 31 | 20 | 29 | 23 | 26 | 40 |
| 33 | 37 | 23 | 33 | 26 | 30 | 50 |
| 32 | 45 | 28 | 40 | 31 | 35 | 65 |
| 31 | 65 | 38 | 55 | 39 | 45 | - |
| 30 | 100 | 50 | 85 | 60 | 75 | - |

Intermediate values can be obtained by interpolation.

The figures in the above table show that the invention permits the production of mineral wool having much lower Lambda at a given density than mineral wool made by known processes such as GB-A-1,559,117. In particular, it is possible to obtain lower Lambda values, for instance as low as 31 or even down to 30, in the invention whereas the lowest possible Lambda value in prior processes has generally been around 32. This means for example that the necessary density of the new wool to meet the important German lambda classification of 035, must be amean density of 34 kg/m$^3$, whereas normal mineral wool must have a density of 65 kg/m$^3$. This means that 48% of the wool by weight and thereby the production cost is saved.

As the important part of a production line for mineral wool is limited by the capacity in tons wool per hour when producing this product, the above metioned density reduction means a capacity increase of the production line of 91%, virtually without cost increase.

Other differences between the mineral wool of the invention and mineral wool made by processes such as GB-A-1,559, 117 reside in the amount of shot above 63µm, which typically was around 30% but is now around 20%, the amount of shot above 250µm, which typically was 3 to 5% but is now around 1% or less, the weight percentage of fibres in the wool having diameter above 5µm which now is frequently substantially 5% but in the old process typically was around 25%, and the ratio of average length to average diameter which is now above 1,200 but typically used to be up to around 800 or 900.

The invention is illustrated by reference to the accompanying drawings in which:

Figure 1 is a front view of a set of rotors assembled at one end of a fiberising chamber for use in apparatus according to the invention;

Figure 2 is a cross-section on the line II-II through a set of rotors in Figure 1 and through the collecting chamber in which they are positioned in use; and

Figure 3 is a detail of the slot around one of the rotors.

Figure 4 is a front view of three of the sets of rotors arranged at one end of the chamber in accordance with the invention.

Figure 5 is a graph of Lambda against density for a standard mineral wool and that obtained in the present invention.

The apparatus includes three sets of rotors 1 each mounted on the front face 2 of a housing 3. They are positioned at one end of a chamber to receive melt from channels 35 that lead from a melt furnace. Each rotor is mounted in conventional manner on a driven axle that allows it to be rotated at high peripheral speed. The set consists of four rotors, a top rotor 4 that rotates anticlockwise, a second fiberising rotor 5 that rotates clockwise, a third fiberising rotor 6 that rotates anticlockwise, and a fourth fiberising rotor 7 that rotates clockwise. The bearings and drive mechanisms are not shown. Air slots 8, 9, 10 and 11 are associated with, respectively, the rotors 4, 5, 6 and 7, each slot extending around part only of the rotor.

Molten mineral melt is poured on to the rotor 4 along the path that terminates at point A that preferably makes an angle B with the horizontal from 40 to 65°, preferably 45° to 60°.

The second fiberising rotor 5 should be positioned at or only slightly below the first rotor and so the angle C typically is from 0° to 20°, often around 5 to 10°.

By this means, it is possible to ensure that melt that is thrown off the first rotor on to the second rotor impacts on the peripheral surface of the second rotor substantially at right angles (e.g., from 75 to 105° to the normal). Similarly, it is preferred that the sum of angles D, E and F should be as low as possible. F is the included angle between the horizontal and the line joining the axes of the third and fourth rotors, E is the included angle between the lines joining the axes of the third and fourth rotors and the second and third rotors, while D is the included angle between lines joining the axes of the first and second rotors with the axes of the second and third rotors. Preferably C + D + E + F is below 150° but should generally be above 120°, and most preferably it is in the range 125 to 142°, with best results being obtained at around 135 to 140°.

Some of the melt striking the top rotor 4 at A may be thrown off the rotor 4 as fibres but most or all is thrown on to subsequent rotor 5. Some of the melt is fiberised off that rotor whilst the remainder is thrown along path 13 on to subsequent rotor 6. A significant amount of this is fiberised off rotor 6, mainly in the area where there is slot 9, but some is thrown along path 14 on to the subsequent rotor 7. A significant amount is fiberised in the general direction 15 but a large amount is also fiberised around the remainder of the rotor surface included within slot 10.

Since the slots 8, 9, 10 and 11 do not extend around the entire periphery of each rotor, the air flow in the region of paths 12, 13 and 14 can be controlled and, indeed, can be substantially zero.

The top, or first, rotor may have a size of about 150mm and preferably each of the other rotors has a size of around 200, and thus the ratio of the last to first is around 1.2:1 to 1.5:1, preferably around 1.33:1.

The speed of rotation of the rotors is, preferably, around 13,000, 15,000, 17,000 and 19,000rpm respectively and thus the ratio of the speed of the last rotor to the first rotor is typically around 1.2 to 1.7, preferably around 1.5 :1.

The acceleration force on the top rotor is then around 140,000m/s$^2$ and on the other rotors is, respectively, around 245,000, 312,000 and 390,000m/s$^2$ respectively.

The rate of supply of melt onto each top rotor is generally in the range 2 to 3 tons/hour and so typically the entire apparatus runs at 7.5 to 12.5 tons/hour.

The air emerging through the slots preferably has a linear velocity of 100 to 200m/s. This air flow may have both axial and tangential components, or solely axial.

In order to control the angle of air flow, within each slot blades 25 can be mounted at an angle, relative to the axial direction of the associated rotor, that can be predetermined at a value ranging, typically, from zero to 50°. For instance, in slot 10 the angle in the region G to H can increase from 0° at G to about 20° at H and then the angle of the blades in the region H to I can be substantially uniform at 45°. Similarly, in slot 10 the angle can increase from about zero at J up to about 20° at K and can then increase and be substantially uniform throughout the region K to L at an angle of about 45°.

In slot 8, it may be preferred to have a lesser angle, typically a uniform angle of around 15 to 30°, often around 20 or 25°.

Although it is convenient to supply the air through the slots, a similar effect can be achieved by other means of providing a continuous curtain of air over the rotor surface, for instance a series of adjacent blast nozzles arranged around the rotor in the position shown in the drawings for the slots and that will lead to the formation of a wall jet.

The inner edge 24 of each slot is preferably coaxial with the associated rotor and preferably has a diameter that is substantially the same as the associated rotor.

Binder sprays 18 can be mounted as a central nozzle on the front face of each rotor and eject binder into the fibres that are blown off the rotor. Instead of or in addition to this, separate binder sprays may be provided, for instance beneath or above the set of rotors and directed substantially axially.

The fiberising chamber comprises a pit 20 having a double screw 21 that collects pearls and other fibre that drops into the pit and recycles them to the melt chamber. A conveyor 22 collects the fibres and carries them away from the spinners. Air is forced through a secondary air ring, for instance a plurality of orifices 23 arranged around the front face of the housing 2 and/or in and/or beneath the front face of the housing 2. The secondary air ring provides an air stream to promote the axial transport of the fibres away from the rotors and to control their rate of settlement and the intermixing with binder.

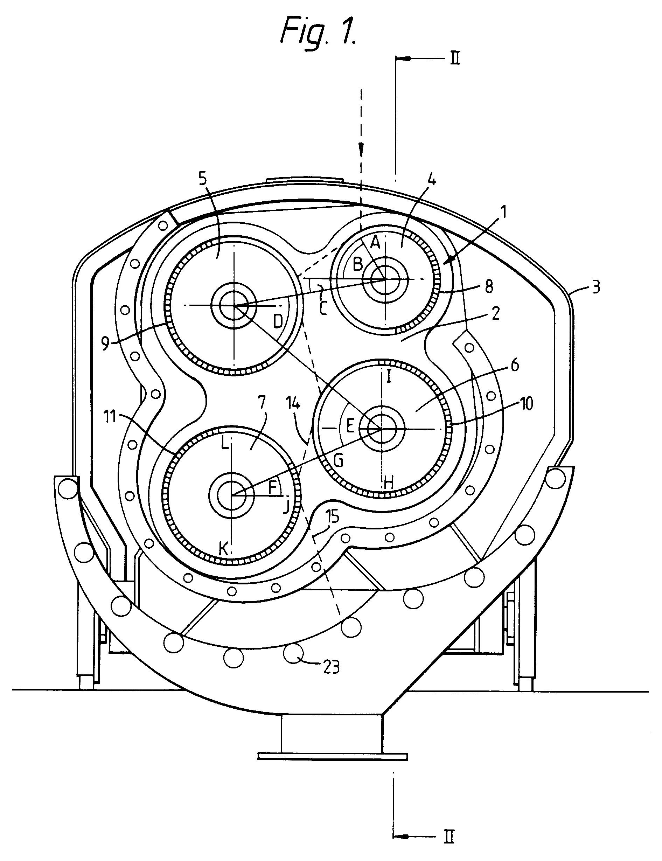

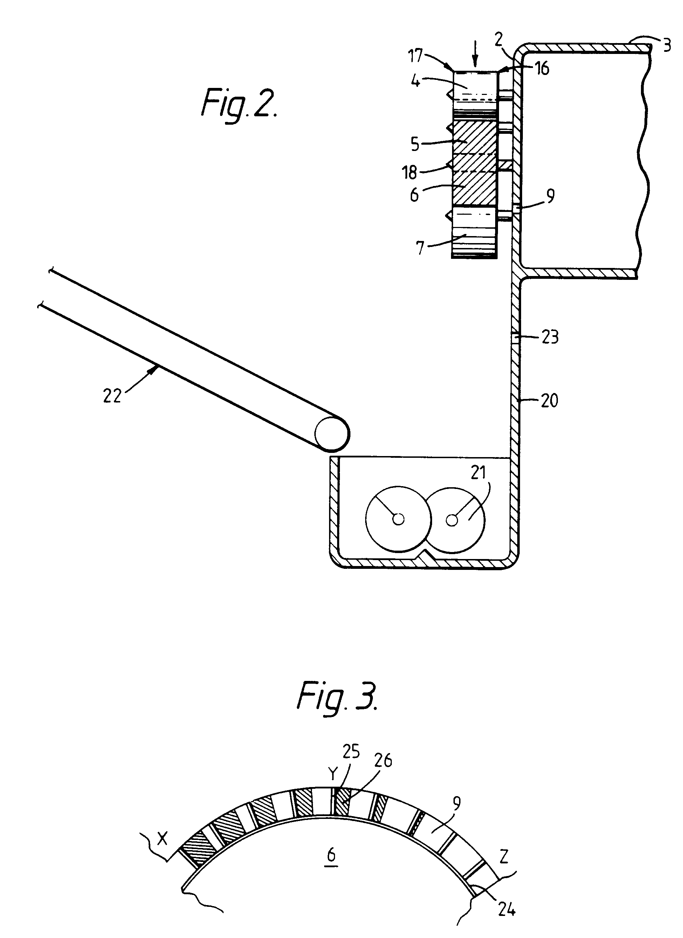

It will be seen from Figure 3 that the inner edge 24 of the annular slot has substantially the same diameter as the outer edge of the periphery of rotor 6 and that the blades 25 are arranged substantially radially across the slot. Of course, if desired, they may be arranged at an angle. The leading edge of the blades is shown as 25, and the side face the blades is shown as 26. In Figure 3, position X corresponds approximately to position I in Figure 1, i.e., where the blades are arranged at about 42°, position Y corresponds to position H, i.e., where the blades are arranged at around 20°, and position G corresponds to position Z, i.e., where the blades are at 0° and thus promote truly axial flow of the air.

Although only a single air inlet 23 is illustrated in Figure 2, preferably there are a plurality of individually mounted air slots that are mounted beneath the rotors and that direct air in a generally forward direction. Some or all of them are pivotally mounted so that they can be relatively horizontal or relatively vertical or otherwise inclined. Also they can have blades that control the direction of air from the slot. Also, the blades can be mounted for reciprocating motion in order that they can be reciprocated during use so as to provide a pulsating air stream. Generally the slots point upwards so as to direct air upwardly and forwardly. By appropriate choice of air streams, and their movement if any, it is possible to optimise fibre collection, binder distribution, and the properties of the final product.

In an example, the spinning chamber is provided broadly as shown in the drawings but with three substantially identical fiberising means each having a set of four rotors. The first rotor has a diameter of 150mm while the other three all have diameters of 200mm. The rotors rotate at, respectively, 13,000, 15,000, 17,000 and 19,000rpm. This gives acceleration fields of $139km/s^2$, $246km/s^2$, $312km/s^2$ and $391km/s^2$ respectively. The inner periphery of each of the slots 9, 10 and 11 has a radius identical to the radius of the periphery of the associated rotor. Air is forced out of the slots at a linear speed of 120 m/s. The blades are arranged at different angles within the slots, as described above, so that the air flow is substantially axial where the rotors are close to one another and is split into approximately equal axial and tangential components at the outermost positions on the rotors.

Mineral melt of the following composition: 49% $SiO_2$, 13% $Al_2O_3$, 2.1% $TiO$, 5.3% $FeO$, 14.2% $CaO$, 9.7% $MgO$, 2.6% $Na_2O$, 1.1% $K_2O$ is poured on to each top rotor at a position A that makes an angle B of 60° with the horizontal. Angles C, D, E and F are, respectively, 10°, 48°, 63° and 24°. The temperature of the melt when it flows down to the top rotor is 1500°.

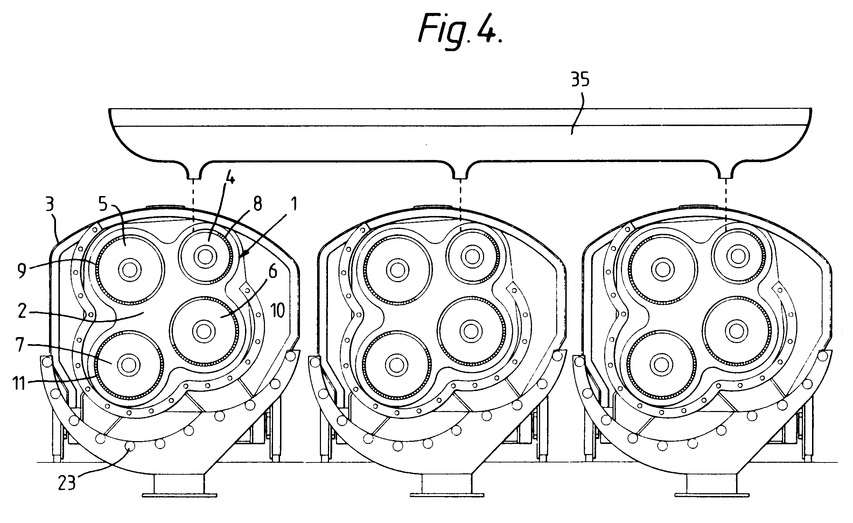

Around each fiberising means 5000 $m^3/h$ primary air is blown through the slots 9, 10 and 11 and 5000 $m^3/h$ secondary air is blown through the slots 23 through reciprocating outlets 30, 31 and 32 as shown in Figure 4 and binder is sprayed both coaxially as shown in Figure 2 and from binder sprays arranged around the fiberising means.

The rate of feed of melt on to each top rotor is about 2.5 tons per hour giving a total feed to the chamber of 7.5 tons per hour. A small amount of this is recovered as shot from the pit 21 but the great majority is recovered as the bonded stone wool batts.

The fibres are collected on conveyor 22 and compressed to various densities. The density and the associated Lambda value are shown in the table above in the column headed "Example". Thus a batt having Lambda 36 can have a density of 20kg/m$^3$ while a batt having Lambda 34 can have a density 27kg/m$^3$.

Analysis of the batt shows that it consists of (based on inorganic material) about 80% by weight fibres and total shot above 63$\mu$m about 20% of which about 0.7% is above 250$\mu$m. Average fibre diameter is about 2$\mu$m and average fibre length is about 3mm giving a ratio of length: diameter of about 1500. Tensile strength is 14kN/m$^2$.

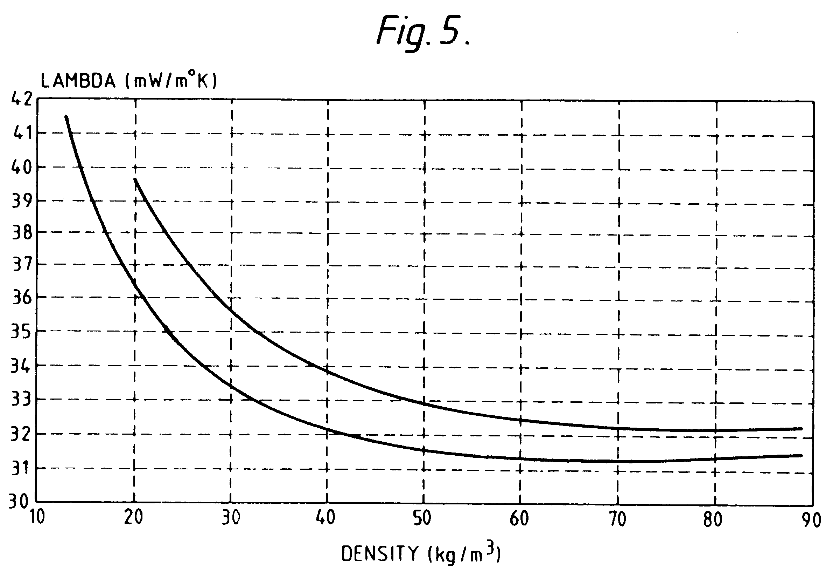

In Figure 5 the upper curve represents a standard mineral wool made by a process such as described in GB-A-1,559,117 and the lower curve represents the mineral wool of the present invention when the apparatus was run according to the above example.

The graph illustrates that with the process of the invention it is possible to achieve equivalent Lambda values to a standard mineral wool but at a lower density ie. using a lower amount of mineral wool, and thereby reducing production costs.

Also, the lower curve approaches, and is often close to, the curve obtained with glass wool. Accordingly it is possible for the first time to obtain conductivity properties in the invention using mineral wool that approach those of glass wool despite the much cheaper manufacturing and material costs.

**Claims**

1. Apparatus for formation of mineral wool comprising
   a fiberising chamber
   at least two fiberising means in side-by-side relationship in the chamber each for receiving mineral melt and converting it i to mineral wool fibres,

air supply means (8, 9, 10, 11) for blowing the fibres axially along the chamber, and

collector means comprising at least one conveyor (22) in the base of the chamber for collecting the blown fibres as a way of carrying them away from the fiberising means, and in which

each fiberising means comprises

a set of at least three rotors (4, 5, 6, 7) mounted on a housing (3) each for rotation about a different substantially horizontal axis and arranged such that when the rotors are rotating melt poured on to the periphery of the top rotor (4) in the set is thrown on to the periphery of each subsequent rotor (5, 6, 7) in turn and fibres are thrown off the rotors

characterised in that all the rotors have a size of not more than 250mm diameter, each of the said subsequent rotors in the set is provided with driving means and has a size such that each can rotate to give an acceleration field of at least $250km/s^2$, and

the air supply means comprise air supply slot means associated (8, 9, 10, 11) with each of the said subsequent rotors wherein each slot means has an internal diameter substantially the same as the external diameter of the periphery of its associated rotor and is constructed for discharging an air blast substantially parallel to that periphery to form a wall jet.

2. Apparatus according to claim 1 in which each top rotor (4) has a diameter of from 100 to 180mm and the other rotors (5, 6, 7) have diameters larger than the top rotor and within the range 130 to 220mm.

3. Apparatus according to claim 1 or claim 2 in which the top rotor (4) is provided with driving means and has a size such that it can rotate with an acceleration field that is preferably above 50, and most preferably above, $100km/s^2$.

4. Apparatus according to any preceding claim in which in each set all the rotors other than the first rotor (4) are provided with means for rotation at 14000 to 45000 rpm or a peripheral speed of 140 to 250m/s.

5. Apparatus according to any preceding claim in which the acceleration field on the last two rotors (6, 7) in each set is above $300km/s^2$.

6. Apparatus according to any preceding claim in which the second rotor (5) is mounted with its axis making an angle of 0 to 20°, preferably 5 to 10°, below the horizontal through the axis of the first rotor (4) in the set, and the melt strikes the first rotor at a position that makes an angle from 40 to 65°, preferably 45 to 60°, above that horizontal.

7. Apparatus according to any preceding claim further comprising a secondary air ring (23) which comprises a plurality of orifices around the front face of the housing (3) and/or in the front face of the housing and/or beneath the front face of the housing wherein each orifice is capable of producing a blast of air.

8. A process of making mineral wool fibres characterised in that it is conducted using apparatus according to any preceding claim and comprises pouring mineral melt on to the periphery of the top rotors (4) while rotating the top rotors at a speed such that the acceleration field is above $50km/s^2$, whereby melt on the top rotors is thrown on to the periphery of the second rotors (5) and then on to the periphery of each subsequent rotor wherein at least the last two rotors (6, 7) rotate to give an acceleration field of at least $250km/s^2$ and air having a linear velocity of above 100m/s is forced out of each slot means (8, 9, 10, 11) as a wall jet along the periphery of the associated rotor.

9. A process according to claim 8 in which the mineral melt is stone melt and the product is stone wool.

10. Mineral wool formed by a method according to claim 8 or claim 9 and consisting of 70 to 90%, preferably 75 to 88%, by weight mineral wool fibres having a diameter up to $5\mu m$, 0 to 5%, preferably 0 to 2%, by weight mineral wool fibres having diameter above $5\mu m$, 10 to 30%, preferably 15 to 25%, by weight shot having a diameter of above $63\mu m$, and in which the length based average diameter of the fibres is from 1 to 4, preferably 1 to 3, $\mu m$, the ratio of average fibre length:length based average diameter is from 1,000 to 3,000, preferably 1,100 to 2,000, the density is from 15 to $200kg/m^3$ and the thermal conductivity Lambda is from 30 to 40mw/m·K at 10°C, and the relationship between density and Lambda is as set out in the following table:

| Lambda mW/m°K | Maximum Density kg/m$^3$ | Minimum Density |
|---|---|---|
| 40 | 16 | 12 |
| 38 | 18 | 13 |
| 36 | 22 | 15 |
| 35 | 24 | 18 |
| 34 | 29 | 20 |
| 33 | 33 | 23 |
| 32 | 40 | 28 |
| 31 | 55 | 38 |
| 30 | 85 | 50 |

**Patentansprüche**

1. Vorrichtung zum Herstellen von Mineralwolle, umfassend
   eine fasererzeugende Kammer,
   wenigstens zwei fasererzeugende Einrichtungen nebeneinander in der Kammer jeweils zur Aufnahme von Mineralschmelze und ihrer Umwandlung in Mineralwollfasern,
   Luftzufuhreinrichtungen (8, 9, 10, 11) zum Blasen der Fasern axial entlang der Kammer und Aufnahmeeinrichtungen, umfassend wenigstens eine Zufuhreinrichtung (22) in der Kammerbasis zur Aufnahme der geblasenen Fasern zu ihrer Wegführung von der fasererzeugenden Einrichtung, und worin
   jede fasererzeugende Einrichtung einen Satz von wenigstens drei Rotoren (4, 5, 6, 7), montiert auf einem Gehäuse (3) zur Rotation um eine andere, im wesentlichen horizontale Achse und so angeordnet, daß, wenn die Rotoren rotieren, auf den Umfang des vordersten Rotors (4) in dem Satz gegossene Schmelze wiederum auf den Umfang eines jeden nachfolgenden Rotors (5, 6, 7) geschleudert und Fasern von den Rotoren abgeschleudert werden, umfaßt,
   dadurch gekennzeichnet, daß alle Rotoren eine Größe von nicht mehr als 250 mm Durchmesser haben, jeder der nachfolgenden Rotoren in dem Satz mit Antriebseinrichtungen ausgestattet ist und eine solche Größe hat, daß jeder rotieren kann, um ein Beschleunigungsfeld von wenigstens 250 km/s$^2$ zu ergeben, und
   die Luftzufuhreinrichtungen jedem der nachfolgenden Rotoren zugeordnete Luftzufuhr-Schlitzeinrichtungen (8, 9, 10, 11) umfassen, wobei jede Schlitzeinrichtung einen Innendurchmesser hat, der im wesentlichen der gleiche wie der Außendurchmesser des Umfangs ihres zugeordneten Rotors ist und so gebaut ist, daß ein Luftstrahl im wesentlichen parallel zu dem Umfang zur Bildung eines Wandstrahls austritt.

2. Vorrichtung nach Anspruch 1, in der jeder vorderste Rotor (4) einen Durchmesser von 100 bis 180 mm hat und die anderen Rotoren (5, 6, 7) Durchmesser größer als der vorderste Rotor und im Bereich von 130 bis 220 mm haben.

3. Vorrichtung nach Anspruch 1 oder Anspruch 2, in der der vorderste Rotor (4) mit Antriebseinrichtungen versehen ist und eine solche Größe hat, daß er mit einem Beschleunigungsfeld rotieren kann, das vorzugsweise über 50 und am meisten bevorzugt über 100 km/s$^2$ ist.

4. Vorrichtung nach irgend einem vorhergehenden Anspruch, in der jeder Satz aller anderen Rotoren als der erste Rotor (4) zur Rotation bei 14 000 bis 45 000 UpM oder einer Umfangsgeschwindigkeit von 140 bis 250 m/s ausgestattet ist.

5. Vorrichtung nach irgend einem vorhergehenden Anspruch, in der das Beschleunigungsfeld auf den beiden letzten Rotoren (6, 7) in jedem Satz über 300 km/s$^2$ ist.

6. Vorrichtung nach irgend einem vorhergehenden Anspruch, in der der zweite Rotor (5) so montiert ist, daß seine Achse einen Winkel von 0 bis 20°, vorzugsweise 5 bis 10°, unter der Horizontalen durch die Achse des ersten Rotors (4) in dem Satz bildet, und die Schmelze den ersten Rotor in einer Position trifft, die einen Winkel von 40 bis 65°, vorzugsweise 45 bis 60°, über der Horizontalen bildet.

**7.** Vorrichtung nach irgend einem vorhergehenden Anspruch, weiter einen Sekundärluftring (23) umfassend, der eine Vielzahl von Düsenöffnungen um die Vorderfläche des Gehäuses (3) herum und/oder in der Vorderfläche des Gehäuses und/oder unter der Vorderfläche des Gehäuses umfaßt, worin jede Düsenöffnung einen Luftstrahl hervorzubringen vermag.

**8.** Verfahren zum Herstellen von Mineralwollfasern, dadurch gekennzeichnet, daß es mit einer Vorrichtung gemäß irgend einem vorhergehenden Anspruch durchgeführt wird und das Gießen von Mineralschmelze auf den Umfang der vordersten Rotoren (4), wobei die vordersten Rotoren mit einer solchen Geschwindigkeit rotieren, daß das Beschleunigungsfeld über 50 $km/s^2$ ist, wodurch die Schmelze auf den vordersten Rotoren auf den Umfang der zweiten Rotoren (5) und dann auf den Umfang eines jeden nachfolgenden Rotors geschleudert wird, wobei wenigstens die letzten beiden Rotoren (6, 7) rotieren, um ein Beschleunigungsfeld von wenigstens 250 $km/s^2$ zu ergeben, und Luft mit einer linearen Geschwindigkeit von über 100 m/s aus jeder Schlitzeinrichtung (8, 9, 10, 11) als Wandstrahl entlang dem Umfang des zugeordneten Rotors ausgepreßt wird, umfaßt.

**9.** Verfahren nach Anspruch 8, bei dem die Mineralschmelze Steinschmelze ist und das Produkt Steinwolle ist.

**10.** Mineralwolle, hergestellt nach einem Verfahren gemäß Anspruch 8 oder Anspruch 9 und bestehend aus 70 bis 90 Gewichtsprozent, vorzugsweise 75 bis 88 Gewichtsprozent Mineralwollfasern mit einem Durchmesser bis zu 5 $\mu$m, 0 bis 5 Gewichtsprozent, vorzugsweise 0 bis 2 Gewichtsprozent, Mineralwollfasern mit einem Durchmesser über 5 $\mu$m, 10 bis 30 Gewichtsprozent, vorzugsweise 15 bis 25 Gewichtsprozent Schmelzperlen mit einem Durchmesser von über 63 $\mu$m, und worin der längenbezogene Durchschnittsdurchmesser der Fasern von 1 bis 4, vorzugsweise 1 bis 3 $\mu$m, das Verhältnis von Durchschnittsfaserlänge zu längenbezogenem Durchschnittsdurchmesser von 1000 bis 3000, vorzugsweise 1100 bis 2000, ist, die Dichte von 15 bis 200 $kg/m^3$ und die Wärmeleitfähigkeit Lambda von 30 bis 40 mw/m°K bei 10°C ist und die Beziehung zwischen Dichte und Lambda wie in der folgenden Tabelle aufgeführt ist:

| Lambda mW/m°K | Maximale Dichte kg/$m^3$ | Minimale Dichte |
|---|---|---|
| 40 | 16 | 12 |
| 38 | 18 | 13 |
| 36 | 22 | 15 |
| 35 | 24 | 18 |
| 34 | 29 | 20 |
| 33 | 33 | 23 |
| 32 | 40 | 28 |
| 31 | 55 | 38 |
| 30 | 85 | 50 |

## Revendications

**1.** Machine pour former de la laine minérale comprend :
une chambre de fibrage,
au moins deux moyens de fibrage disposés côte à côte dans la chambre, dont chacun est destiné à recevoir une masse minérale fondue et à la transformer en fibres de laine minérale,
des moyens d'alimentation en air (8, 9, 10, 11) servant à souffler les fibres axialement sur la longueur de la chambre, et
des moyens collecteurs comprenant au moins un transporteur (22) situé à la base de la chambre pour collecter les fibres soufflées et les évacuer des moyens de fibrage sous la forme de laine de roche,
et dans laquelle chaque moyen de fibrage comprend
un jeu d'au moins trois rotors (4, 5, 6, 7) montés sur un carter (3), chacun pour tourner autour d'un axe sensiblement horizontal différent et agencé de manière que, lorsque les rotors tournent, une masse fondue versée sur la périphérie du rotor supérieur (4) du jeu soit projetée tour à tour sur la périphérie de chacun des rotors suivants (5, 6, 7) et que les fibres soient éjectées par des rotors,

caractérisé en ce que tous les rotors ont une dimension non supérieure à 250 mm de diamètre, chacun desdits rotors suivants du jeu est équipé de moyens d'entraînement et possède une dimension telle qu'il puisse tourner de façon à engendrer un champ d'accélération de plus de 250 km/s$^2$, et

les moyens d'alimentation en air comprennent des moyens formant fente d'alimentation en air (8, 9, 10, 11) associés à chacun desdits rotors suivants, chaque moyen formant fente possèdant un diamètre intérieur sensiblement égal au diamètre extérieur de la périphérie de son rotor respectif et étant construit pour débiter un jet d'air sensiblement parallèle à cette périphérie pour former un jet en rideau.

2. Machine selon la revendication 1, dans laquelle chaque rotor supérieur (4) a un diamètre de 100 à 180 mm et les autres rotors (5, 6, 7) ont des diamètres supérieurs à celui du rotor supérieur et compris dans l'intervalle de 130 à 220 mm.

3. Machine selon la revendication 1 ou la revendication 2, dans laquelle le rotor supérieur (4) est muni de moyens d'entraînement et possède une dimension telle qu'il puisse tourner en engendrant un champ d'accélération qui est de préférence de plus de 50 km/s$^2$ et, dans un mode encore plus préféré, de plus de 100 km/s$^2$.

4. Machine selon une quelconque des revendications précédentes, dans laquelle, dans chaque jeu, tous les rotors autres que le premier rotor (4) sont équipés de moyens permettant de les faire tourner à une vitesse de 14 000 à 45 000 tr/min ou une vitesse périphérique de 140 à 250 m/s.

5. Machine selon une quelconque des revendications précédentes, dans laquelle le champ d'accélération des deux derniers rotors (6, 7) de chaque jeu est de plus de 300 km/s$^2$.

6. Machine selon une quelconque des revendications précédentes, dans laquelle le deuxième rotor (5) est monté avec son axe formant un angle de 0 à 20°, de préférence de 5 à 10°, au-dessous de l'horizontale qui passe par l'axe du premier rotor (4) du jeu, et la masse fondue tombe sur le premier rotor en un point qui forme un angle de 40 à 65°, de préférence de 45 à 60° au-dessus de l'horizontale.

7. Machine selon une quelconque des revendications précédentes, comprenant en outre un anneau d'air secondaire (23) qui comprend une pluralité d'orifices entourant la face frontale du carter (3) et/ou dans la face frontale du carter et/ou au-dessous de la face frontale du carter, anneau dans lequel chaque orifice est capable de produire un jet d'air.

8. Procédé de fabrication de fibres de laine minérale, caractérisé en ce qu'il est conduit en utilisant une machine selon une quelconque des revendications précédentes, et qu'il consiste à verser une masse minérale fondue sur la périphérie des rotors supérieurs (4) tout en faisant tourner les rotors supérieurs à une vitesse telle que le champ d'accélération soit supérieur à 50 km/s$^2$, de sorte que la masse fondue tombant sur les rotors supérieurs est projetée sur la périphérie des deuxièmes rotors (5) puis sur la périphérie de chacun des rotors suivants, dans lequel au moins les deux derniers rotors (6, 7) tournent de manière à engendrer un champ d'accélération d'au moins 250 km/s$^2$, et de l'air ayant une vitesse linéaire de plus de 100 m/s est éjecté de chacun des moyens formant fente (8, 9, 10, 11) sous la forme d'un jet en rideau le long de la périphérie du rotor correspondant.

9. Procédé selon la revendication 8, caractérisé en ce que le masse fondue minérale est une roche fondue et le produit est de la laine de roche.

10. Laine minérale formée par un procédé selon la revendication 8 ou la revendication 9 et composée de 70 à 90 % en poids de fibres minérales ayant un diamètre de jusqu'à 5 $\mu$m, 0 à 5 % en poids de fibres minérales ayant un diamètre supérieur à 5 $\mu$m et 10 à 30 % en poids, de préférence jusqu'à 25 % en poids, de préférence de 0 à 2 % en poids, de granules ayant un diamètre supérieur à 63 $\mu$m et dans lequel le diamètre moyen des fibres de la laine est de 1 à 4 $\mu$m, de préférence de 1 à 3 $\mu$m, le rapport longueur moyenne des fibres : diamètre moyen des fibres est de 1000 à 3000, la densité de la laine est de 15 à 200 kg/m$^3$, et la conductibilité thermique Lambda est de 30 à 40 mW/m°K à 10°C, et la relation entre la densité et le Lambda est telle que représentée au tableau suivant :

| Lambda mW/m ° K | Densité maximum kg/m$^3$ | Densité minimum kg/m$^3$ |
|---|---|---|
| 40 | 16 | 12 |
| 38 | 18 | 13 |
| 36 | 22 | 15 |
| 35 | 24 | 18 |
| 34 | 29 | 20 |
| 33 | 33 | 23 |
| 32 | 40 | 28 |
| 31 | 55 | 38 |
| 30 | 85 | 5 |

# Fig. 1.

Fig.2.

Fig.3.

Fig.4.

Fig. 5.

LAMBDA (mW/m°K)

DENSITY (kg/m³)

EP 0 567 480 B1